# EUROPEAN PATENT SPECIFICATION

(11) **EP 2 080 829 B1**
(45) Date of publication and mention of the grant of the patent: **01.06.2016**
(21) Application number: 07829548.2
(22) Date of filing: 11.10.2007
(51) Int. Cl.: D05C 17/00, B32B 5/26

(54) **GROUND FABRIC FOR EMBROIDERY AND PROCESS FOR PRODUCING THE SAME**
GRUNDMATERIAL FÜR STICKEREI SOWIE HERSTELLUNGSVERFAHREN DAFÜR
TISSU DE FOND POUR BRODERIE ET SON PROCÉDÉ DE FABRICATION

(30) Priority: 13.10.2006 JP 2006279437
(43) Date of publication of application: 22.07.2009
(73) Proprietor: Kuraray Co., Ltd., Okayama 710-8622 (JP)
(72) Inventor: OOMAE, Yoshinobu, Okayama-shi Okayama 702-8601 (JP); TAKISHIMA, Keisuke, Osaka-shi Osaka 530-8611 (JP); SUGINO, Junichi, Osaka-shi Osaka 530-8611 (JP)
(74) Representative: Vossius & Partner Patentanwälte Rechtsanwälte mbB
(86) International application number: PCT/JP2007/069810
(87) International publication number: WO 2008/044721

(56) References cited:
- EP-A1- 1 522 620
- JP-A- S5 685 452
- JP-A- 07 054 257
- JP-A- 11 217 759
- JP-A- 11 286 859
- JP-A- H08 127 919
- JP-A- 2001 299 568
- JP-A- 2003 129 383
- JP-B1- 47 050 001
- JP-B2- 3 345 191
- JP-B2- 54 029 638
- JP-B2- 60 040 542
- JP-Y1- 43 030 146

## Description

### BACKGROUND OF THE INVENTION

The present invention relates to embroidery base fabrics having a good texture that is uniform visually and physically, a good softness and an excellent dimensional stability, and a process for producing the embroidery base fabric.

The embroidery base fabrics are conventionally formed from a woven fabric made of long fibers of a water-soluble polyvinyl alcohol (hereinafter referred to merely as "PVA"). The woven fabric exhibits are excellent in the dimensional stability and free from misalignment of embroidery patterns formed thereon. In addition, a base fabric made of such a woven fabric is advantageous because it is dissolved and removed at a relatively low temperature. However, the long fibers of the water-soluble PVA are very expensive because its raw material is expensive and a special weaving method is required. In addition, since the base fabric formed from such a woven fabric is hard, needles tends to be broken upon forming the embroidery patterns.

On the other hand, various attempts have been made to employ a water-soluble nonwoven fabric as an alternative embroidery base fabric in place of the expensive water-soluble woven fabric. For example, there has been proposed a nonwoven fabric made of heat-fusible PVA fibers having a water dissolution temperature of 10°C or lower (for example, Patent Documents 1 and 2). However, these special fibers are expensive because of their poor productivity. In addition, although an increased emboss-bonding area is effective to ensure a good dimensional stability of the base fabric upon embroidering, the nonwoven fabric loses the softness, thereby increasing the needle break upon embroidering. Further, a relatively large mass per unit area of the nonwoven fabric is also effective to ensure a good dimensional stability and prevent the needle break upon embroidering. However, this measure still fails to provide a suitable embroidery base fabric having an excellent quality.

In addition, there has been proposed an embossed nonwoven fabric formed from a PVA spun bonded web (for example, Patent Document 3). The embossed nonwoven fabric fits for mass-producing, but requires to use a raw material resin having a low polymerization degree for stable spinning. Further, the embossed nonwoven fabric is hardly subjected to sufficient orientation and crystallization when heat-treated. As a result, it is difficult to obtain an embroidery base fabric having a good dimensional stability.

Further, there has been proposed a reinforced embroidery base fabric obtained by bonding a random nonwoven web and a cloth material to each other through a water-soluble adhesive or the like (for example, Patent Document 4). However, the cloth material requires a special production facility, thereby making it difficult to provide an inexpensive embroidery base fabric for general use.

In addition, there have been proposed many embroidery base fabric having a good dimensional stability which are obtained by bonding random webs made of PVA fibers to each other through an aqueous solution of a water-soluble resin binder, for example, there has been proposed a nonwoven fabric obtained by bonding webs made of PVA long fibers to each other through a aqueous binder solution (for example, Patent Document 5). However, the nonwoven fabric of PVA long fibers is hardly produced by a continuous method, thereby failing to provide a general-purpose, inexpensive base fabric for chemical laces. Further, the base fabric bonded using the aqueous binder solution containing a water-soluble resin unfavorably shrinks largely upon heat treatment.

In addition to the above techniques, there is also known a method of spraying or impregnating a hydroentangled sheet of PVA fibers with an aqueous binder solution and drying the sheet while stretching in the width direction. However, in this method, since a relatively large amount of a binder resin must adhere onto the sheet, the resultant fabric fails to satisfy both a dimensional stability and softness at the same time. Further, when applying the above method to low-temperature dissolving PVA fibers which enable the use of dyed polyester embroidery yarns that are likely to suffer from migration, the swelling and shrinking due to water occur, thereby failing to obtain an embroidery base fabric having a good texture.

Patent Document 1: JP 11-217759A
Patent Document 2: JP 11-286859A
Patent Document 3: JP 2001-279568A
Patent Document 4: JP 2003-129383A
Patent Document 5: JP 7-054257A

### SUMMARY OF THE INVENTION

Accordingly, an object of the present invention is to provide an embroidery base fabric having a texture that is uniform visually and physically even when the mass per unit area is small, a good softness and an excellent dimensional stability. Another object is to provide a method for producing the embroidery base fabric, in particular, a cost-effective method of producing an inexpensive embroidery base fabric by improving a process passing property (capability of conducting the aimed treatment successfully and delivering the treated product to the next step without any trouble) and enhancing the production speed.

As a result of extensive researches for achieving the above object, the inventor have found that the quality stability, process passing property and production speed can be improved and enhanced without using any expensive facilities by a process including a step of providing short cut fibers of water-soluble fibers having a predetermined length over a drylaid nonwoven fabric made of water-soluble fibers, for example, scattering so as to form a layer of the short cut fibers; a step of applying a foamed binder made of a water-soluble PVA resin onto the resultant material; and a step of subjecting the material to a dry heat treatment, thereby reaching a process of producing an embroidery base fabric in an inexpensive manner.

Thus, the present invention relates to an embroidery base fabric having a mass per unit area of from 25 to 300 g/m² and a water dissolution temperature of from 0 to 100°C, which simultaneously satisfying the following requirements 1 to 3:
(1) the embroidery base fabric is a laminate comprising a layer A constituted from a drylaid nonwoven fabric made of water-soluble fibers and a layer B made of water-soluble short cut fibers having a fiber length of from 1 to 30 mm in which the layers A and B are bonded to each other through a foamed aqueous solution containing a polyvinyl alcohol-based resin;
(2) a weight ratio of the layer A to the layer B (A:B) is from 50:50 to 90:10; and
(3) a ratio of a breaking strength in a machine direction of the embroidery base fabric to a breaking strength in a transverse direction thereof is from 0.75 to 1.25.

The present invention further relates to a method for producing the embroidery base fabric which comprises the steps of: superposing at least one layer B made of water-soluble short cut fibers having a fiber length of from 1 to 30 mm on a layer A constituted from a drylaid nonwoven fabric made of water-soluble fibers; applying a foamed aqueous solution containing a polyvinyl alcohol-based resin to the superposed body; and subjecting the superposed body to a dry heat treatment to bond the layer A and the layer B to each other.

In accordance with the present invention, there is provided an embroidery base fabric having a uniform and soft texture and an excellent dimensional stability. The embroidery base fabric of the present invention is produced by the process including a step of providing water-soluble short cut fibers having a predetermined length over a drylaid nonwoven fabric made of water-soluble fibers, for example, scattering so as to form a layer of the short cut fibers, a step of applying a foamed binder made of a water-soluble PVA resin to the resultant material and a step of subjecting the material to a dry heat treatment. Therefore, only by slightly modifying an ordinary process for producing an embroidery base fabric, the embroidery base fabric satisfying the above properties is produced with low costs without using expensive special facilities.

### BRIEF DESCRIPTION OF THE DRAWINGS

Fig. 1 is a schematic view showing an example of an embroidery base fabric having a two-layer structure according to the present invention; and
Fig. 2 is a schematic view showing an example of an embroidery base fabric having a three-layer structure according to the present invention.

### DETAILED DESCRIPTION OF THE INVENTION

The present invention is described in detail below. First, the drylaid nonwoven fabric used in the embroidery base fabric of the present invention is explained. The fibers for forming the drylaid nonwoven fabric are not particularly limited as long as they are water-soluble fibers having a water dissolution temperature of from 0 to 100°C and preferably from 5 to 100°C. Particularly preferred are PVA fibers. Examples of the PVA polymer used for producing the PVA fibers include partially saponified PVA containing vinyl acetate units in addition to vinyl alcohol units, and modified PVA containing vinyl alcohol units, vinyl acetate units and other units.

In order to produce PVA fibers having a water dissolution temperature of from 0 to 60°C and preferably from 5 to 60°C, the saponification degree of the partially saponified PVA is preferably 96 mol% or less, namely, the content of the vinyl acetate unit is preferably 4 mol% or more. When the saponification degree is less than 80 mol%, the obtained fibers tend to be glued with each other, and the crystallinity of the polymer in the obtained fibers tends to be lowered. As a result, the fibers tend to be deteriorated in dimensional stability under a high humidity condition, or tend to suffer from significant shrink when dissolved in water. Therefore, the saponification degree of the partially saponified PVA is preferably 80 mol% or more.

In order to produce PVA fibers having a water dissolution temperature of from 60 to 100°C, the content of the vinyl alcohol unit is preferably 96 mol% or more, and the saponification degree of the partially saponified PVA is more preferably from 96 to 99.5 mol%. When the saponification degree exceeds 99.5 mol%, the crystallization proceeds when subjected to dry heat stretching or dry heat contraction, so that the water dissolution temperature of the resultant polymer tends to exceed 100°C. PVA composed of 100% of vinyl alcohol unit tends to exhibit a very high crystallinity after formed into fibers, thereby failing to obtain fibers having a water dissolution temperature of from 0 to 100°C.

When using the modified PVA for producing the PVA fibers having a water dissolution temperature of from 0 to 60°C, a modified PVA having a degree of modification of about 0.5 mol% may be suitably used for the production of the embroidery base fabric as long as the modifying unit exhibits a high crystallization-inhibiting effect. However, the degree of modification of the modified PVA is preferably from 1 to 20 mol% and more preferably from 2 to 15 mol%. Also, the modified PVA used for producing the PVA fibers having a water dissolution temperature of from 60 to 100°C preferably has a degree of modification of not less than 0.01 mol% but less than 2 mol% and more preferably from 0.1 to 1 mol%.

Examples of the compound used for introducing the modifying unit into PVA include ethylene, allyl alcohol, itaconic acid, acrylic acid, vinyl amine, maleic anhydride and a ring-opened product thereof, sulfonic acid-containing vinyl compounds, fatty acid vinyl esters having 4 or more carbon atoms such as vinyl pivalate, vinyl pyrrolidone, and the compounds obtained by neutralizing a part or whole of the ionic groups of the above compounds. The modifying unit may be introduced into PVA by either copolymerization or a post-reaction after polymerization. The modifying units distribute in the polymer chain in a random form, a grafted form or a block form, although not limited thereto. When the degree of modification exceeds 20 mol%, the crystallinity is considerably deteriorated to fail to exhibit a good dimensional stability thereof under a high humidity condition. Therefore, such a modified PVA polymer is unsuitable for production of the embroidery base fabric of the present invention.

The degree of polymerization of the PVA polymer is not particularly limited. In view of mechanical properties and dimensional stability, the PVA polymer preferably has an average degree of polymerization of from 100 to 4000 and more preferably from 700 to 2500 when determined from a viscosity of an aqueous solution thereof at 30°C.

The water dissolution temperature referred to herein is measured by the method described later.

Next, the process for producing the PVA fibers is explained. The PVA fibers having excellent mechanical properties and water solubility may be efficiently produced by spinning a raw spinning solution prepared by dissolving a water-soluble PVA polymer in water or an organic solvent. The raw spinning solution may also contain additives or other polymers unless the effects of the present invention are adversely affected. Examples of the solvents used in the raw spinning solution include water; polar solvents such as dimethylsulfoxide (DMSO), dimethylacetamide, dimethylformamide and N-methylpyrrolidone; polyhydric alcohols such as glycerol and ethylene glycol; mixtures of these solvents with swelling metal salts such as rhodan salts, lithium chloride, calcium chloride and zinc chloride; mixtures of these solvents; and mixtures of these solvents with water, with water, DMSO and a mixture thereof being most preferred in view of low-temperature dissolvability, low toxicity and low corrosiveness.

The concentration of the PVA polymer in the raw spinning solution varies depending upon composition, degree of polymerization and solvent, and is preferably from 8 to 40% by mass. The temperature for extruding the raw spinning solution is controlled such that the solution is free from gelation, decomposition and discoloration, and is preferably from 50 to 150°C.

The raw spinning solution is extruded from a nozzle and spun by a wet method, a dry method or a dry/wet method to obtain the PVA fibers. In the wet spinning method and the dry/wet spinning method, the extruded raw spinning solution is introduced into a solidification solution to solidify the PVA polymer. In particular, when the raw spinning solution is extruded from a multi-hole spinneret, the wet spinning method is more preferably used rather than the dry/wet method from the standpoint of preventing the fusing between the extruded fibers. The wet spinning method is a method in which the raw spinning solution is directly extruded into a solidification bath from the spinneret, whereas the dry/wet spinning method is a method in which the raw spinning solution is once extruded from the spinneret into air or an inert gas and then introduced into the solidification bath.

The solidification solution for the raw spinning solution using an organic solvent is different from that for the raw spinning solution using water as a solvent. When using an organic solvent as the solvent of the raw spinning solution, in view of a good fiber strength, the solidification solution is preferably a mixed solution composed of a solidifying organic solvent and the organic solvent used in the raw spinning solution. Examples of the solidifying organic solvent include alcohols such as methanol and ethanol; and ketones such as acetone and methyl ethyl ketone, which are capable of solidifying the PVA polymer. When the solvent of the raw spinning solution is DMSO, a mixed solvent of methanol and DMSO is especially preferably used as the solidification solution. In view of a good process passing property and an easy recovery of the solvent, the mixing ratio of methanol to DMSO is preferably from 55/45 to 80/20 (mass basis). When the raw spinning solution is an aqueous solution, the solidification solution is preferably an aqueous solution of inorganic salts capable of solidifying the PVA polymer such as mirabilite, sodium chloride and sodium carbonate. The solidification solution may be acidic, neutral or alkaline. The temperature of the mixed solution of methanol and DMSO as the solidification solution is preferably 30°C or lower. In particular, in view of achieving a uniform gelation upon cooling, the temperature of the solidification solution is more preferably 20°C or lower and still more preferably 15°C or lower, and the lower limit thereof is usually 3°C.

Next, the solidified continuous fibers are subjected to extraction to remove the solvent used in the raw spinning solution. Upon the extraction, the continuous fibers are preferably wet-stretched for preventing the fusing between the fibers during the subsequent drying step and enhancing the fiber strength. The wet-stretch ratio is preferably from 1.5 to 6 times. In the extraction process, the continuous fibers are generally passed through two or more extraction baths. The extraction bath is preferably composed of the solidifying organic solvent solely or a mixture of the solidifying organic solvent and the solvent used in the raw spinning solution. The temperature of the extraction bath is preferably from 0 to 50°C.

Next, the continuous fibers after the extraction for removal are then dried to obtain the PVA fibers. Upon the drying, an oil agent, etc., may be added to the continuous fibers according to the requirements. The drying temperature is preferably from 100 to 210°C. In particular, the drying is preferably conducted by a multi-stage drying in which the continuous fibers are dried at a temperature of 160°C or lower at the initial stage of the drying step and then dried at a higher temperature at the later stage. In addition, the dried continuous fibers may be further subjected to dry heat stretching and dry heat contraction, if needed, to orient and crystallize the molecular chain of PVA, thereby suitably controlling the fiber strength, water resistance and heat resistance of the obtained fibers. If the fiber strength, heat resistance or water resistance is too low, it is readily expected that the fibers are considerably deteriorated in process passing property when processed into a nonwoven fabric, etc. In order to enhance mechanical properties of the obtained fibers, the dry heat stretching is preferably conducted at from 120 to 250°C in a total stretch ratio of from 3 to 20 times and more preferably from 5 to 15 times. The total stretch ratio of 3 times or more enables the production of the fibers having a strength of from 1.5 to 4.0 cN/dtex, and the total stretch ratio of 5 times or more enables the production of the fibers having a strength of from 4.0 to 15 cN/dtex. The total stretch ratio referred to herein is a product of the wet stretch ratio and the dry heat stretch ratio.

Next, the obtained fibers are crimped optionally after adding an oil agent, etc. The crimping may be conducted by known methods. In order to sufficiently crimp the PVA fibers, the crimping is preferably conducted by a method in which the fibers are dry-preheating, mechanically crimped, and then cooled to less than a glass transition temperature to fix the fibers in a crimped state. The number of crimps are preferably from 3 to 15/inch.

The fineness of the PVA fibers used in the present invention is preferably from 0.5 to 5 dtex. If less than 0.5 dtex, the fibers tend to be deteriorated in card passing property, or neps (small fiber knots) tend to occur, resulting in not only considerable deterioration in quality of the resultant embroidery base fabric, but also significant damage to the embroidery base fabric by needles upon embroidering. If more than 5 dtex, although the card passing property is enhanced, it is difficult to obtain a drylaid nonwoven fabric having a low mass per unit area and a uniform texture as well as difficult to obtain a good embroidering owing to drop stitch and misalignment of embroidery patterns. The fineness is more preferably from 1 to 3 dtex. The sectional shape of the PVA fibers is not particularly limited. Further, the length of the PVA fibers forming the drylaid nonwoven fabric is preferably from 30 to 150 mm.

Similar to the fibers used for forming the drylaid nonwoven fabric, the water-soluble short cut fibers may be any water-soluble fibers as long as they have a water dissolution temperature of from 0 to 100°C , and the above PVA fibers may be suitably used as the water-soluble short cut fibers. The short cut fibers may be produced by cutting the fibers obtained by the same method as used for producing the fibers for forming the drylaid nonwoven fabric into the length as described later. The short cut fibers may be crimped. However, when being carded by air, the number of crimps is preferably 8/cm or less. An oil agent is preferably added to the short cut fibers in order to enhance the carding property.

The water dissolution temperature of the fibers for forming the drylaid nonwoven fabric is preferably the same as or higher than that of the short cut fibers. As described later, in the process for producing the embroidery base fabric, the short cut fibers are provided over the drylaid nonwoven fabric, for example, scattered so as to form a layer of the short cut fibers, and then the drylaid nonwoven fabric and the short cut fibers are bonded to each other by using a foamed aqueous solution containing a PVA resin. When the water dissolution temperatures satisfy the above relation, the short cut fibers are partially dissolved in the foam binder by controlling the temperature of the binder, and the dissolved short cut fibers are used as a part of the binder.

The sectional shape of the short cut fibers is not particularly limited. The single fiber fineness of the short cut fibers is preferably from 0.1 to 3.0 dtex and more preferably from 0.3 to 1.5 dtex in order to obtain a more densified embroidery base fabric. If less than 0.1 dtex, the short cut fibers tend to be deteriorated in dispersibility when superposed on the drylaid nonwoven fabric by spraying, thereby failing to obtain an embroidery base fabric having a uniform texture. To avoid this problem, the length of the short cut fibers may be shortened into less than 1 mm to reduce their aspect ratio. Although the dispersibility is improved and a uniform texture is obtained, the resultant fabric has a low strength and is unfavorable for use as the embroidery base fabric. If more than 3.0 dtex, a large amount of the short cut fibers must be used in order to obtain an embroidery base fabric having a uniform texture, resulting in a high mass per unit area and failing to attain a soft feeling.

The short cut fibers are required to have a length of from 1 to 30 mm and preferably from 3 to 12 mm. When less than 1 mm, the effect of reinforcing the drylaid nonwoven fabric is not obtained because of the very short fiber length, thereby failing to enhance the process passing property upon producing the embroidery base fabric and improving the production speed as aimed by the present invention. If more than 30 mm, the short cut fibers are entangled with each other when superposed on the drylaid nonwoven fabric, resulting in poor dispersibility and failing to obtain an embroidery base fabric having a uniform texture.

Next, the process for producing the drylaid nonwoven fabric is described. The fibers forming the drylaid nonwoven fabric are preferably oriented at random, and the drylaid nonwoven fabric may be formed from a web produced by known methods such as a carding method and an air-laid method. As the method of orienting the fibers at random, there may be used known methods such as a cross-lap method and a cris-cross method. In particular, since a tension is applied to the embroidery base fabric in the transverse direction (TD) upon embroidering, the fibers are preferably oriented at random also in view of preventing occurrence of drop stitch and misalignment of the embroidery patterns.

The short cut fibers simply carded by air, etc. are sprayed or scattered onto one or both surfaces of the drylaid nonwoven fabric to form a layer of the short cut fibers. Thereafter, the binder composed of the foamed aqueous solution containing a PVA resin is impregnated into or attached onto the drylaid nonwoven fabric and the layer of the short cut fibers, and then the resultant web is subjected to dry heat treatment, thereby obtaining the embroidery base fabric of the present invention. Further, another drylaid nonwoven fabric may be superposed on the layer of the short cut fibers of the obtained fabric, followed by impregnating the foamed aqueous solution into the superposed body and then subjecting to dry heat treatment.

The foamed aqueous solution containing the PVA resin (binder resin) may be produced, for example, by dissolving a PVA resin in water while stirring to prepare a PVA aqueous solution having a desired concentration (preferably from 1 to 30% by mass), and then blowing air into the PVA aqueous solution under stirring to foam the solution. If required, the PVA aqueous solution may be mixed with suitable assistants and penetrants and then foamed. The foamed aqueous solution may be impregnated into or attached onto the drylaid nonwoven fabric or both the drylaid nonwoven fabric and the layer of the short cut fibers by a method of dropping the foamed aqueous solution from a nozzle onto the nonwoven fabric, a method of contacting the nonwoven fabric with a roller on the surface of which the foamed aqueous solution is applied, a method of dipping the drylaid nonwoven fabric on which the layer of the short cut fibers is superposed in the foamed aqueous solution, etc.

The PVA resin is preferably the PVA polymer (partially saponified PVA and modified PVA) mentioned above.

The amount of the foamed aqueous solution applied is preferably from 2 to 20% by mass on the basis of the total amount of the drylaid nonwoven fabric and the short cut fibers. If less than 2% by mass, the short cut fibers and the drylaid nonwoven fabric are not firmly bonded, resulting in poor strength of the resultant embroidery base fabric. If more than 20% by mass, the amount of the binder resin attached to portions other than the intermingled portion between the fibers of the drylaid nonwoven fabric and the short cut fibers and the intermingled portion between the short cut fibers themselves (hereinafter referred to merely as "fiber intermingled portions") is increased, resulting in poor softness of the resultant embroidery base fabric. In addition, an additional improvement of the strength of the embroidery base fabric is not obtained. Further, the adhesion of the drylaid nonwoven fabric and the short cut fibers onto a roller, etc. tends to be promoted owing to an increased content of the binder resin, to likely wind around the roller, etc. The amount of the foamed aqueous solution applied is more preferably from 3 to 17% by mass and still more preferably from 4 to 15% by mass. The foamed aqueous solution (aqueous binder solution) may also contain a surfactant having a foaming and penetrating effect, a softening agent and a pH modifier according to the requirements. Examples of the surfactant include alkyl ether sulfonic acid surfactants, dodecylbenzenesulfonic acid surfactants and sulfated castor oil. The foamed aqueous solution impregnated may be sucked by a suction device to allow the solution to penetrate from the applied surface to the inside and further the back side of the drylaid nonwoven fabric. Also, the excess foamed aqueous solution may be recovered from the nonwoven fabric by suction and may be reused.

Next, the superposed body of the drylaid nonwoven fabric and the short cut fibers which is impregnated with the foamed aqueous solution is subjected to dry heat treatment (drying treatment). The method of conducting the dry heat treatment is not particularly limited, and may include a hot air drying method and a cylinder drying method. The dry heat treatment is preferably conducted in a hot air oven at from 100 to 180°C. With such a dry heat treatment, an embroidery base fabric having a good softness and a good dimensional stability is obtained.

When the dry heat treatment is conducted after the impregnation of the foamed aqueous solution, the foams of the foamed aqueous solution are broken. When the foams are broken, the binder resin tends to be concentrated to the fiber intermingled portions. As a result, the same bonding force as that obtained by the known binder solutions is obtained even by the use of a relatively small amount of the binder resin. Therefore, since the amount of the binder resin attached to the portions other than the fiber intermingled portions is small as compared to the conventional methods, the resultant embroidery base fabric shows a good flexibility, i.e., a good bending resistance as described later. Further, the amount of water attached to the drylaid nonwoven fabric/short cut fiber superposed body is reduced, resulting in saving of energy required for drying.

Further, even when using low-temperature dissolving PVA fibers that are easily swelled or shrunk with water, the amount of water attached is reduced, thereby preventing the swelling and shrinking of the fibers. As a result, the embroidery base fabric having a uniform texture is obtained without using a special apparatus such as a pin tenter and a sandwich net. In addition, the fibers forming the embroidery base fabric are free from deterioration in properties such as tenacity and elongation owing to the suppressed swelling and shrinking. Therefore, the embroidery base fabric exhibits a high strength even in a low elongation and achieves the 5% modulus strength as described later.

The embroidery base fabric of the present invention which is produced by the above process has a mass per unit area of from 25 to 300 g/m². When less than 25 g/m², the resultant embroidery base fabric is insufficient in the amount of fibers, resulting in non-uniform texture and occurrence of drop stitch or misalignment of embroidery patterns. Further, the embroidery base fabric itself is insufficient in the strength, resulting in considerable deterioration in process passing property upon embroidering. As a result, the workability upon butt seam between the embroidery base fabrics using a sewing machine or stretch-on of the embroidery base fabric on a an embroidering machine is deteriorated. If more than 300 g/m², the production costs of the embroidery base fabric increases, and the resultant embroidery base fabric is deteriorated in flexibility. Further, since the amount of the base fabric to be removed by dissolution after embroidering increases, the costs for the dissolution and the waste water treatment increase. The mass per unit area is preferably from 30 to 150 g/m² and more preferably from 30 to 50 g/m².

The mass ratio between the drylaid nonwoven fabric A and the short cut fiber layer B forming the embroidery base fabric (A:B) is from 50:50 to 90:10 (when two or more drylaid nonwoven fabrics and/or two or more short cut fiber layers are included, the mass ratio is a mass ratio between each drylaid nonwoven fabric A and each short cut fiber layer B). If exceeding 90:10, the resultant embroidery base fabric has a non-uniform texture, thereby failing to sufficiently attain the aimed effect of improving the process passing property If less than 50:50, although the embroidery base fabric has a uniform texture, the bonding strength between the short cut fibers is insufficient, resulting in a poor process passing property. The mass ratio A:B is preferably from 60:40 to 85:15 and more preferably from 70:30 to 80:20.

The embroidery base fabric may have a two-layer laminated structure of drylaid nonwoven fabric A/short cut fiber layer B, a three-layer laminated structure of drylaid nonwoven fabric A/short cut fiber layer B/drylaid nonwoven fabric A, or a 4- or more layer laminated structure.

The breaking strength of the embroidery base fabric is preferably from 40 to 900 N/50 mm in each of the machine direction (MD) and the transverse direction (TD). The breaking strength exceeding 900 N/50 mm in each direction has no adverse influence on the effects of the present invention. The ratio of the breaking strength in MD and TD is from 0.75 to 1.25. When the fibers are oriented in the same direction, the breaking strength in the oriented direction is generally considerably high as compared to those in other directions. Further, the embroidery base fabric shrinks along one direction, to cause process troubles. In particular, the drop stitch or misalignment of embroidery patterns and the break of the base fabric may easily occur. The ratio of the breaking strength is preferably from 0.8 to 1.2 and more preferably from 0.85 to 1.15.

The water dissolution temperature of the embroidery base fabric is from 0 to 100°C and preferably from 5 to 100°C. If exceeding 100°C, a pressure container is required to dissolve the base fabric, to make the operation dangerous and increase the facility costs. Further, much energy is required to dissolve the embroidery base fabric, to increase the production costs. In addition, the embroidery base fabric is hardly completely dissolved in water. Thus, the embroidery base fabric having a high water dissolution temperature must be dissolved in water at a higher temperature after embroidering, thereby causing problems such as undesirable shrinking, damage or deterioration of fibers in the embroidery yarns. Therefore, the water dissolution temperature is preferably as low as possible, more preferably from 5 to 80°C and still more preferably from 5 to 60°C. The water dissolution temperature of the embroidery base fabric referred to herein is measured by the method described below.

The modulus strength at 5% elongation in the transverse direction is one of the most important properties required for the embroidery base fabric. In general, upon embroidery work, the embroidery base fabric is held with clips, etc. and stretched by several % in the transverse direction. The property required for the base fabric upon the embroidery work is not a high breaking strength but a little elongation during the embroidery work, i.e., a high modulus strength in the transverse direction. The embroidery base fabric of the present invention preferably has a 5% modulus strength of from 8 to 200 N/50 mm in the transverse direction. If less than 8 N/50 mm, the base fabric is elongated owing to the tension during the embroidery work, resulting in frequent occurrence of drop stitch or misalignment of embroidery patterns, and therefore, likely failing to obtain fine embroidery patterns. If exceeding 200 N/50 mm, although neither drop stitch nor misalignment of embroidery patterns occurs, the embroidery base fabric loses the flexibility, resulting in considerable deterioration in working efficiency upon butt seam between the base fabric using a sewing machine or stretch-on of the base fabric to an embroidering machine. The 5% modulus strength in the transverse direction is more preferably from 20 to 150 N/50 mm and still more preferably from 25 to 100 N/50 mm. The 5% modulus strength in the machine direction is not important as compared to the 5% modulus strength in the transverse direction, and is preferably from 10 to 250 N/50 mm. This is because when the 5% modulus strength in the machine direction is less than 10 N/50 mm, the base fabric tends to be broken in the machine direction upon stretch-on for embroidering, or troubles tend to occur in a shearing step after the embroidering.

The bending resistance of the embroidery base fabric is preferably from 40 to 150 mm. If less than 40 mm, the embroidery base fabric is too soft, resulting in occurrence of drop stitch and misalignment of the embroidery patterns. If more than 150 mm, the embroidery base fabric is too hard and has a poor flexibility. As a result, the workability of the operation which requires a softness of the embroidery base fabric such as the lamination between the embroidery base fabric and tulle using a sewing machine, the butt seam between the embroidery base fabric using a sewing machine, and the stretch-on of the base fabric to an embroidering machine is considerably deteriorated. Further, upon taking up the raw fabric after the embroidering, the fabric tends to be wrinkled, thereby failing to continuously produce the raw fabric. The bending resistance is preferably from 50 to 140 mm and more preferably from 60 to 130 mm. The method of measuring the bending resistance is described below.

In addition to the modulus strength at 5% elongation in the transverse direction of the embroidery base fabric, another important property required for the embroidery base fabric is a water dissolution temperature. In general, as the water dissolution temperature is lowered, the desorption or falling off of dyes from embroidery yarns during the removal of the base fabric by dissolution after the embroidering and the re-adhesion of the desorbed dyes onto the embroidery yarns are more effectively prevented. Therefore, when using dyed embroidery yarns made of rayon or polyesters, the water dissolution temperature is the most important factor for selecting the base fabric.

More specifically, letting the water dissolution temperature of the water-soluble fibers for the drylaid nonwoven fabric be X°C and the water dissolution temperature of the embroidery base fabric be Z°C, X - Z is preferably 5°C or less, more preferably 4°C or less and still more preferably 2°C or less. X - Z is generally 10°C or more. In the present invention, by providing the foamed aqueous solution of the water-soluble PVA resin as a binder to the nonwoven fabric, X - Z is reduced to 5°C or less. When X - Z is 5°C or less, the energy required in the base fabric dissolution step is saved, and the embroidery base fabric having a softer feel is obtained. If X - Z is more than 5°C, the desorption or falling-off of dyes from the dyed embroidery yarns and the re-adhesion of the desorbed dyes onto the embroidery yarns tend to occur. In particular, in the conventional methods such as spray method and impregnating method, X - Z exceeds 5 °C, to cause the problems of the desorption or falling-off of dyes from the dyed embroidery yarns and re-adhesion of the desorbed dyes.

### EXAMPLES

The present invention is described in more detail by referring to the following examples. However, it should be noted that the following examples are only illustrative and not intended to limit the invention thereto. The properties were measured by the following methods.

### (1) Fiber strength (cN/dtex)

Measured according to JIS L1013.

### (2) Water dissolution temperature (X°C) of fibers for drylaid nonwoven fabric

Several tens milligrams of the water-soluble fibers cut into a length of 1 to 2 mm were added to 100 cc of water at 5°C. The temperature was raised at a temperature rise rate of 1°C/min under stirring to measure the water dissolution temperature (X°C) at which the fibers were completely dissolved in water. Also, the water dissolution temperature (Y°C) of the short cut fibers was measured by the same method as described above.

### (3) Water dissolution temperature (Z°C) of embroidery base fabric

The embroidery base fabric sampled with a size of 4 cm square was added to 400 cc of water at 5°C. The temperature was raised at a temperature rise rate of 1°C/min under stirring to measure the water dissolution temperature (Z°C) at which the sample was broken to 4 or more pieces.

### (4) Breaking strength (N/50 mm)

Measured according to JIS P8113.

### (5) Modulus strength at 5% elongation of embroidery base fabric (N/50 mm width)

The nonwoven fabric was sampled with a size of 50 mm in the machine direction and 170 mm in the transverse direction, and subjected to tensile test under the conditions: a grip distance of 100 mm, a grip width of 25 mm and a pulling speed of 100 mm/min using an Instron tensile tester to measure the strength of the sample at 5% elongation.

### (6) Bending resistance of embroidery base fabric (mm)

Measured according to a JIS cantilever 40.5° method.

### (7) Texture

The embroidery base fabric was observed for uneven shade (uneven thickness) and the texture was evaluated according to the following ratings:
A: Visually unrecognized.
B: Slightly visually recognized.
C: Apparently visually recognized.

The fineness, mass per unit area and density were measured by the methods generally employed in fiber arts and fabric arts.

### EXAMPLE 1

### Step 1

A partially saponified PVA having a viscosity-average polymerization degree of 1700 and a saponification degree of 98.6 mol% was dissolved under heating in DMSO at 95°C under a nitrogen flow to prepare a raw spinning solution having a PVA concentration of 20.5% by mass. The obtained raw spinning solution was extruded from a spinneret having a pore diameter of 0.08 mm and the number of holes of 40000 into a solidification bath of methanol/DMSO = 65/35 (mass ratio) at 10°C, thereby conducting a dry/wet spinning.

### Step 2

The solidified fibers obtained in the step 1 were dipped in a second bath having the same composition as that of the solidification bath and then wet-stretched by 2.3 times in a methanol bath at 25°C. Thereafter, the fibers were dried, dry-stretched under heating by 3.5 times (total stretch ratio: 8 times) at 210°C, and then crimped and cut, thereby obtaining water-soluble PVA fibers having a fineness of 1.7 dtex, a strength of 8.2 cN/dtex, the number of crimps of 5.8/inch, a fiber length of 38 mm and a water dissolution temperature X of 83.4°C.

### Step 3

Separately, a partially saponified PVA having a viscosity-average polymerization degree of 1750 and a saponification degree of 88 mol% was dissolved under heating in DMSO at 97°C in a nitrogen atmosphere to prepare a raw spinning solution having a PVA concentration of 21.5% by mass. The thus obtained raw spinning solution was extruded from a nozzle having a pore diameter of 0.08 mm and the number of holes of 40000 into a solidification bath of methanol/DMSO = 65/35 (mass ratio) at 8°C, thereby conducting a dry/wet spinning.

### Step 4

The resultant solidified fibers were dipped in a second bath having the same composition as that of the solidification bath and then wet-stretched by 2.3 times in a methanol bath at 25°C. Thereafter, the fibers were dried, dry-stretched at 205°C by 2.6 times (total stretch ratio: 6 times) and cut, thereby obtaining water-soluble short cut fibers having a fineness of 2.2 dtex, a strength of 6.8 cN/dtex, a fiber length of 5 mm and a water dissolution temperature Y of 35°C.

### Step 5

A drylaid nonwoven fabric having a mass per unit area of 20 g/m² which was completely made of the water-soluble PVA fibers obtained in the step 2 was produced at a line speed of 45 m/min using a parallel carding machine. The water-soluble short cut fibers obtained in the step 4 were carded by air and then sprayed onto the drylaid nonwoven fabric in an amount of 10 g/min². Separately, another drylaid nonwoven fabric having a mass per unit area of 20 g/m² which was completely made of the water-soluble PVA fibers obtained in the step 2 was produced and superposed on the sprayed water-soluble short cut fibers.

### Step 6

The superposed body obtained in the step 5 was dipped in a foamed aqueous solution containing a PVA resin having a viscosity-average polymerization degree of 1750 and a saponification degree of 88 mol%. The foamed aqueous solution was prepared by foaming an aqueous solution containing 0.3% by mass of "Berol-48" (linear alkylbenznesulfonic acid salt surfactant) available from Akzo Nobel N.V. and 5% by mass of the PVA resin using a hand mixer.

### Step 7

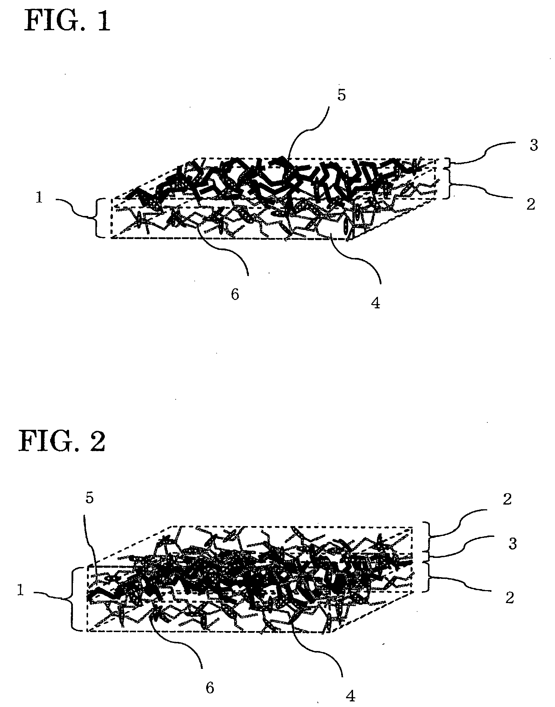

The superposed body impregnated with the foamed aqueous solution was dried (dry heat treatment) at 120°C, thereby obtaining an embroidery base fabric having a laminated structure of drylaid nonwoven fabric layer A/short cut fiber layer B/drylaid nonwoven fabric layer A as shown in Fig. 2. In Fig. 2, 1 is an embroidery base fabric, 2 is a drylaid nonwoven fabric layer, 3 is a short cut fiber layer, 4 is a water-soluble fiber, 5 is a water-soluble short cut fiber, and 6 is a foamed binder.

The embroidery base fabric having a good flexibility and a good dissolvability was produced with a good process passing property even at a high line speed of 45 m/min without any troubles. The results of the measurements are shown in Table 1.

### EXAMPLE 2

A drylaid nonwoven fabric having a mass per unit area of 40 g/m² which was completely made of the water-soluble PVA fibers obtained in Example 1 was produced at a line speed of 70 m/min using a parallel carding machine. The short cut fibers obtained in Example 1 were carded by air and then sprayed onto the drylaid nonwoven fabric in an amount of 10 g/m². Separately, another drylaid nonwoven fabric having a mass per unit area of 40 g/m² which was completely made of the water-soluble PVA fibers obtained in Example 1 was produced and superposed on the sprayed water-soluble short cut fibers. The obtained superposed body was dipped in the foamed aqueous solution and then dried in the same manner as in Example 1, thereby obtaining an embroidery base fabric having a laminated structure of drylaid nonwoven fabric layer A/short cut fiber layer B/drylaid nonwoven fabric layer A as shown in Fig. 2.

The embroidery base fabric having a good flexibility and a good dissolvability was produced with a good process passing property even at a high line speed of 70 m/min without any troubles. The results of the measurements are shown in Table 1.

### EXAMPLE 3

A drylaid nonwoven fabric having a mass per unit area of 20 g/m² which was completely made of the water-soluble PVA fibers obtained in Example 1 was produced at a line speed of 45 m/min using a parallel carding machine. The short cut fibers obtained in Example 1 were carded by air and then sprayed onto the drylaid nonwoven fabric in an amount of 10 g/m². The obtained superposed body was dipped in the foamed aqueous solution and then dried in the same manner as in Example 1, thereby obtaining an embroidery base fabric having a laminated structure of drylaid nonwoven fabric layer A/short cut fiber layer B as shown in Fig. 1. In Fig. 1, 1 is an embroidery base fabric, 2 is a drylaid nonwoven fabric layer, 3 is a short cut fiber layer, 4 is a water-soluble fiber, 5 is a water-soluble short cut fiber, and 6 is a foamed binder.

The embroidery base fabric having a good flexibility and a good dissolvability was produced with a good process passing property even at a high line speed of 45 m/min without any troubles. The results of the measurements are shown in Table 1.

### EXAMPLE 4

A drylaid nonwoven fabric having a mass per unit area of 40 g/m² which was completely made of the water-soluble PVA fibers obtained in Example 1 was produced at a line speed of 45 m/min using a parallel carding machine and then a crosslapper. The short cut fibers obtained in Example 1 were carded by air and then sprayed onto the drylaid nonwoven fabric in an amount of 20 g/m². The obtained superposed body was dipped in the foamed aqueous solution and then dried in the same manner as in Example 1, thereby obtaining an embroidery base fabric having a laminated structure of drylaid nonwoven fabric layer A/short cut fiber layer B as shown in Fig. 1.

The embroidery base fabric having a good flexibility and a good dissolvability was produced with a good process passing property even at a high line speed of 45 m/min without any troubles. The results of the measurements are shown in Table 1.

**Table 1**

| | Examples | | | |
|---|---|---|---|---|
| | 1 | 2 | 3 | 4 |
| Fibers for drylaid nonwoven fabric | | | | |
| fineness (dtex) | 1.7 | 1.7 | 1.7 | 1.7 |
| length (m) | 38 | 38 | 38 | 38 |
| water dissolution temperature X (°C) | 83.4 | 83.4 | 83.4 | 83.4 |
| Short cut fibers | | | | |
| fineness (dtex) | 2.2 | 2.2 | 2.2 | 2.2 |
| length (m) | 5 | 5 | 5 | 5 |
| water dissolution temperature Y (°C) | 35 | 35 | 35 | 35 |
| Amount of foamed aqueous solution (mass %) | 5 | 5 | 5 | 5 |
| Line speed (m/min) | 45 | 70 | 45 | 45 |
| Embroidery base fabric | | | | |
| layer structure | A/B/A | A/B/A | A/B | A/B |
| weight ratio | 80/20/80 | 89/11/89 | 67/33 | 67/33 |
| mass per unit area (g/m²) | 48.9 | 90.4 | 32.2 | 58.5 |
| thickness (µm) | 305 | 525 | 219 | 387 |
| density (g/cm3) | 0.160 | 0.172 | 0.147 | 0.151 |
| texture | A | A | B | A |
| breaking strength (N/50 mm) | | | | |
| MD | 103.9 | 221.8 | 74.3 | 118.8 |
| TD | 97.1 | 203.5 | 66.1 | 149.2 |
| breaking strength ratio (MD/TD) | 1.07 | 1.09 | 1.12 | 0.80 |
| 5% modulus strength (N/50 mm) | | | | |
| MD | 80.6 | 178.9 | 50.9 | 83.2 |
| TD | 73.4 | 160.3 | 45.8 | 117.1 |
| bending resistance (mm) | 118 | 143 | 79 | 115 |
| water dissolution temperature Z (°C) | 80.5 | 81.0 | 80.3 | 80.3 |
| Difference between water dissolution temperatures X - Z (°C) | 2.9 | 2.4 | 3.1 | 3.1 |

### COMPARATIVE EXAMPLE 1

A drylaid nonwoven fabric having a mass per unit area of 33.4 g/m² which was completely made of the water-soluble PVA fibers obtained in Example 1 was produced at a line speed of 45 m/min using a parallel carding machine. The obtained drylaid nonwoven fabric was dipped in the foamed aqueous solution and then dried in the same manner as in Example 1, thereby attempting to obtain an embroidery base fabric. However, after dipping in the foamed aqueous solution, the drylaid nonwoven fabric was broken, so a continuous long-term production was impossible. In addition, the obtained base fabric was unsuitable as an embroidery base fabric because of its poor texture.

### COMPARATIVE EXAMPLE 2

A drylaid nonwoven fabric having a mass per unit area of 20 g/m² which was completely made of the water-soluble PVA fibers obtained in Example 1 was produced at a line speed of 45 m/min using a parallel carding machine. The short cut fibers obtained in Example 1 were carded by air and then sprayed onto the drylaid nonwoven fabric in an amount of 3 g/m². Separately, another drylaid nonwoven fabric having a mass per unit area of 20 g/m² which was completely made of the water-soluble PVA fibers obtained in Example 1 was produced and superposed on the sprayed water-soluble short cut fibers. The obtained superposed body was dipped in the foamed aqueous solution and then dried in the same manner as in Example 1, thereby attempting to obtain a base fabric having a laminated structure of drylaid nonwoven fabric layer/short cut fiber layer/drylaid nonwoven fabric layer. However, after dipping in the foamed aqueous solution, the drylaid nonwoven fabric was broken, so a continuous long-term production was impossible. In addition, the obtained base fabric was unsuitable as an embroidery base fabric because of its poor texture.

### COMPARATIVE EXAMPLE 3

A drylaid nonwoven fabric having a mass per unit area of 30 g/m² which was completely made of the water-soluble PVA fibers obtained in Example 1 was produced at a line speed of 45 m/min using a parallel carding machine and then a crosslapper. The obtained drylaid nonwoven fabric was dipped in the foamed aqueous solution and then dried in the same manner as in Example 1, thereby attempting to obtain a base fabric. However, after dipping in the foamed aqueous solution, the drylaid nonwoven fabric was broken, so a continuous long-term production was impossible. In addition, the obtained base fabric was unsuitable as an embroidery base fabric because of its poor texture.

### REFERENCE EXAMPLE

A drylaid nonwoven fabric having a mass per unit area of 30.3 g/m² which was completely made of the water-soluble PVA fibers obtained in Example 1 was produced at a line speed as low as 20 m/min. The obtained drylaid nonwoven fabric was dipped in the foamed aqueous solution and then dried in the same manner as in Example 1, thereby obtaining an embroidery base fabric. Although the process passing property was good because the line speed was low, the productivity was poor because of the low line speed. In addition, the obtained embroidery base fabric had a slightly poor texture.

**Table 2**

| | Comparative Examples | | | Reference Example |
|---|---|---|---|---|
| | 1 | 2 | 3 | |
| Fibers for drylaid nonwoven fabric | | | | |
| fineness (dtex) | 1.7 | 1.7 | 1.7 | 1.7 |
| length (m) | 38 | 38 | 38 | 38 |
| water dissolution temperature X (°C) | 83.4 | 83.4 | 83.4 | 83.4 |
| Short cut fibers | | | | |
| fineness (dtex) | - | 2.2 | - | - |
| length (m) | - | 5 | - | - |
| water dissolution temperature Y (°C) | - | 35 | - | - |
| Amount of foamed aqueous solution (mass %) | 5 | 5 | 5 | 5 |
| Line speed (m/min) | 45 | 45 | 45 | 20 |
| Embroidery base fabric | | | | |
| layer structure | A | A/B/A | A | A |
| weight ratio | 100 | 93/7/93 | 100 | 100 |
| mass per unit area (g/m²) | 33.4 | 44.5 | 30.8 | 30.3 |
| thickness (µm) | 237 | 299 | 202 | 198 |
| density (g/cm³) | 0.141 | 0.149 | 0.152 | 0.153 |
| texture | C | C | C | C |
| breaking strength (N/50 mm) | | | | |
| MD | 61.1 | 88.7 | 36.4 | 69.6 |
| TD | 33.2 | 67.7 | 57.4 | 48.7 |
| breaking strength ratio (MD/TD) | 1.84 | 1.31 | 0.63 | 1.43 |
| 5% modulus strength (N/50 mm) | | | | |
| MD | 40.3 | 64.5 | 25.4 | 48.8 |
| TD | 22.2 | 48.2 | 43.1 | 35.5 |
| bending resistance (mm) | 60 | 89 | 49 | 65 |
| water dissolution temperature Z (°C) | 80.2 | 80.3 | 80.2 | 80.1 |
| Difference between water dissolution temperatures X - Z (°C) | 3.2 | 3.1 | 3.2 | 3.3 |

### INDUSTRIAL APPLICABILITY

In accordance with the present invention, a laminated nonwoven fabric, which is suitable as an embroidery base fabric because of its softness, a good workability, a high dimensional stability, and a difficulty of causing drop stitch and misalignment of embroidery patters, is provided at low costs.

## Claims

1. An embroidery base fabric having a mass per unit area of from 25 to 300 g/m² and a water dissolution temperature of from 0 to 100°C, which simultaneously satisfying the following requirements 1 to 3:
(1) the embroidery base fabric is a laminate comprising a layer A constituted from a drylaid nonwoven fabric made of water-soluble fibers and a layer B made of water-soluble short cut fibers having a fiber length of from 1 to 30 mm in which the layer A and the layer B are bonded to each other through a foamed aqueous solution containing a polyvinyl alcohol-based resin;
(2) a weight ratio of the layer A to the layer B (A:B) is from 50:50 to 90:10; and
(3) a ratio of a breaking strength in a machine direction of the embroidery base fabric to a breaking strength in a transverse direction thereof is from 0.75 to 1.25.

2. The embroidery base fabric according to claim 1, wherein each of the water-soluble fibers for forming the drylaid nonwoven fabric and the water-soluble short cut fibers has a water dissolution temperature of from 0 to 100°C.

3. A method for producing the embroidery base fabric as defined in claim 1 or 2, which comprises the steps of:
superposing at least one layer B made of water-soluble short cut fibers having a fiber length of from 1 to 30 mm on a layer A constituted from a drylaid nonwoven fabric made of water-soluble fibers;
applying a foamed aqueous solution containing a polyvinyl alcohol-based resin to the superposed body; and
subjecting the superposed body to a dry heat treatment to bond the layer A and the layer B to each other.

## Patentansprüche

1. Ein Grundgewebe für Stickerei mit einem Gewicht pro Flächeneinheit von 25 bis 300 g/m² und einer Wasserauflösungstemperatur von 0 bis 100°C, welches gleichzeitig die folgenden Anforderungen 1 bis 3 erfüllt:
(1) das Grundgewebe für Stickerei ist ein Laminat, umfassend eine Schicht A, die aus einem Trockenvliesstoff, hergestellt aus wasserlöslichen Fasern, gebildet ist, und eine Schicht B, die aus wasserlöslichen kurz geschnittenen Fasern mit einer Faserlänge von 1 bis 30 mm, hergestellt ist, wobei die Schicht A und die Schicht B durch eine geschäumte wässrige Lösung, die ein Harz auf Polyvinylalkoholbasis enthält, miteinander verbunden sind;
(2) ein Gewichtsverhältnis der Schicht A zu der Schicht B (A:B) beträgt 50:50 bis 90:10; und
(3) ein Verhältnis einer Bruchfestigkeit in einer Maschinenrichtung des Grundgewebes für Stickerei zu einer Bruchfestigkeit in einer Querrichtung davon beträgt 0,75 bis 1,25.

2. Das Grundgewebe für Stickerei gemäß Anspruch 1, wobei jede der wasserlöslichen Fasern zur Bildung des Trockenvliesstoffs und der wasserlöslichen kurz geschnittenen Fasern eine Wasserauflösungstemperatur von 0 bis 100°C hat.

3. Ein Verfahren zur Herstellung des Grundgewebes für Stickerei wie in Anspruch 1 oder 2 definiert, welches die Schritte umfasst:
Überlagern mindestens einer Schicht B, hergestellt aus wasserlöslichen kurz geschnittenen Fasern mit einer Faserlänge von 1 bis 30 mm, auf eine Schicht A, die aus einem Trockenvliesstoff, hergestellt aus wasserlöslichen Fasern, gebildet ist;
Aufbringen einer geschäumten wässrigen Lösung, die ein Harz auf Polyvinylalkoholbasis enthält, auf den überlagerten Körper; und
Unterwerfen des übergelagerten Körpers einer Trockenwärmebehandlung, um die Schicht A und die Schicht B miteinander zu verbinden.

## Revendications

1. Textile de base pour broderie ayant une masse par unité de surface de 25 à 300 g/m² et une température de dissolution dans l'eau de 0 à 100 °C, qui répond simultanément aux exigences 1 à 3 suivantes :
(1) le textile de base pour broderie est un stratifié comprenant une couche A constituée d'un textile non-tissé posé à sec fabriqué à partir de fibres hydrosolubles et une couche B fabriquée à partir de fibres hydrosolubles à coupe courte ayant une longueur de fibre de 1 à 30 mm, la couche A et la couche B étant liées l'une à l'autre par le biais d'une solution aqueuse moussée contenant une résine à base d'alcool polyvinylique ;
(2) un rapport en poids de la couche A sur la couche B (A:B) est de 50:50 à 90:10; et
(3) un rapport entre la résistance à la rupture du textile de base pour broderie dans un sens de la machine et la résistance à la rupture dans un sens transversal de celle-ci est de 0,75 à 1,25.

2. Textile de base pour broderie selon la revendication 1, dans lequel chacune des fibres hydrosolubles pour former le textile non tissé posé à sec et des fibres hydrosolubles à coupe courte a une température de dissolution dans l'eau de 0 à 100 °C.

3. Méthode de production du textile de base pour broderie selon la revendication 1 ou 2, qui comprend les étapes consistant à :
superposer au moins une couche B fabriquée à partir de fibres hydrosolubles à coupe courte ayant une longueur de fibre de 1 à 30 mm sur une couche A constituée d'un textile non tissé posé à sec fabriqué à partir de fibres hydrosolubles ;
appliquer une solution aqueuse moussée contenant une résine à base d'alcool polyvinylique sur le corps superposé ; et
soumettre le corps superposé à un traitement thermique à sec pour lier la couche A et la couche B l'une à l'autre.
